# EUROPEAN PATENT APPLICATION

(11) **EP 2 050 592 A1**
(43) Date of publication of application: **22.04.2009**
(21) Application number: 08075791.7
(22) Date of filing: 01.10.2008
(51) Int. Cl.: B60C 27/10

(54) **A support body for an anti-skid chain**

(30) Priority: 15.10.2007 IT MO20070315
(71) Applicant: Weissenfels S.p.A., 33018 Fusine in Valromana,Tarvisio (UD) (IT)
(72) Inventor: Gobessi, Mario, 33100 Udine (IT); Piasenzotto, Marco, 33100 Udine (IT)
(74) Representative: Gotra, Stefano

(57) **Abstract**

A support body for an anti-skid chain, comprising: a first half-shell (2) and a second half-shell (3), having an overall circular and flat development, which are coaxial to a common axis (x) and are associated to one another rotatably with respect to the common axis (x); the first half-shell (2) is provided with at least a first seating (5) which opens towards the second half-shell (3); the second half-shell (3) is provided with a pin (7) which projects towards the first half-shell (2) and is conformed and arranged such as to engage in the first seating (5) in a determined relative angular position between the first half-shell (2) and the second half-shell (3), the pin (7) being mobile between a first position, in which the pin (7) projects more with respect to the second half-shell (3) and can engage in the first seating (5), and a second position, in which the.pin (7) projects less with respect to the second half-shell (3) and does not engage in the first seating (5).

## Description

The invention relates to a support body for an anti-skid chain.

Anti-skid chains for motor vehicles are known in which a chain, destined to be positioned in contact with the tread of a wheel, is supported by a certain number of radial arms which extend from a central support body predisposed to be constrained to the rim of the wheel.

In known-type antiskid chains, the support body is a rather simple component which performs the sole function of supporting the radial arms. The applicant has recently studied and perfected a support body which, apart from supporting the radial arms, also enables the radial arms to be radially translated, with the aim of adapting the anti-skid chain to wheels of different diameters. The translation of the radial arms is actuated via relative rotation of two half-shells which, once the desired position of the radial arms has been reached, are blocked together in relative rotation. The activation in rotation and the relative blocking between the two half-shells are however relatively awkward actions.

The aim of the present invention is to provide a support body for an antiskid chain in which the activation in rotation and the blocking of the two half-shells is easy and rapid.

Further characteristics and advantages of the invention will better appear from the detailed description that follows, made with reference to the accompanying figures of the drawings, which are provided by way of non-limited example, in which:
figure 1 is a perspective view of a support body of the invention, combined with an anti-skid chain mounted on a wheel;
figure 2 is a section of the support body of the invention, on an axial plane;
figure 3 is a perspective view of the support body of the present invention, in which a cover is in an open position.

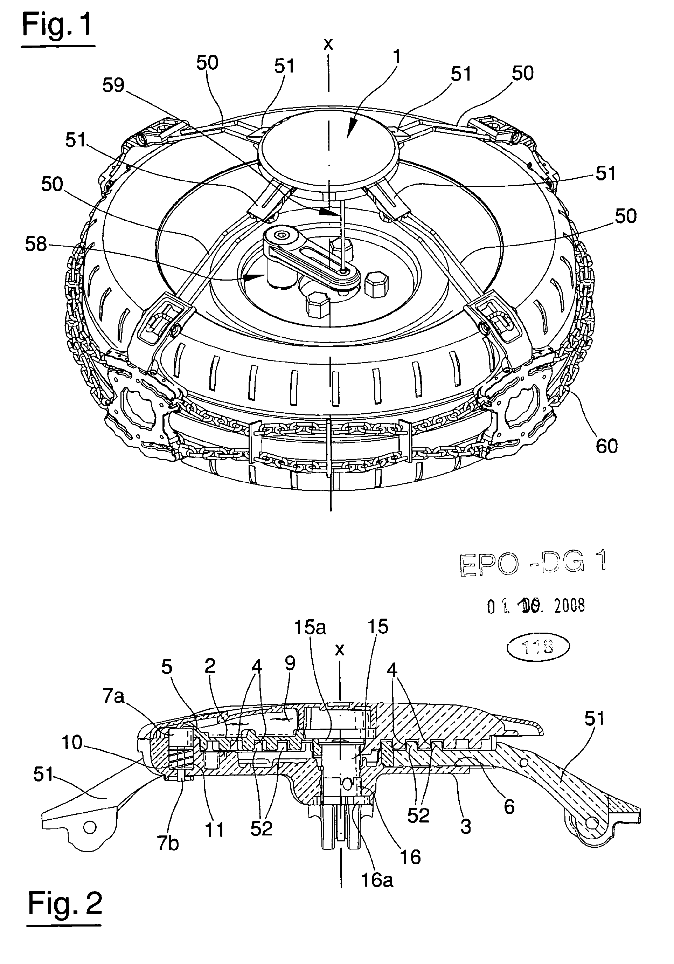

As can be seen in figure 1, the support body 1 of the present invention is predisposed to associate to radial arms 50 which support an anti-skid chain 60 destined to be located in contact with the tread of a tyre. The radial arms 50 preferably exhibit a connecting portion 51 which is associated to the support body 1. The support body 1 can be associated to the rim of a wheel by means of a connecting device 58, 59, so that the anti-skid chain is constrained to the wheel.

The support body 1 comprises a first and a second half-shell 2, 3, having an overall circular and flat development and being coaxial with a common axis x and reciprocally rotatably associated about the common axis x. Connecting means constrain the first and second half-shells 2, 3 to one another in relative movements directed along the axis x. The connecting means comprise a shaped pin 15, 16 concentric to the common axis x, which is disposed across the first and second half-shells 2, 3. The shaped pin is made up of a first portion 15 and a second portion 16. The second portion 16 inserts in a seating afforded through the second half-shell 3 and is provided at an end thereof with a shaped annular swelling 16a which engages in a shaped recess arranged on the external surface of the second half-shell 3, such that the second portion 16 is solidly constrained to the second half-shell 3 in rotation about the common axis x. The first portion 1 of the shaped pin inserts in a seating afforded through the first half-shell 2 and solidly engages to the second portion 16 in rotation about the axis x. The first portion 15 and the second portion 16 are constrained to one another in movements directly along the axis x by means of, for example, a rivet applied at a circular element 15a positioned at an end of the first portion 15. The circular element 15a, in turn, rests on the external surface of the first half-shell 2. The shaped annular swelling and the circular element 15a define two undercuts predisposed to abut one against the first half-shell and the other against the second half-shell 3, such that the first and the second half-shells 2, 3 are solidly constrained to one another in relative movements directed along the axis x. A through-seating can be predisposed through the shaped pin 15, 16 in order slidably to house at least a tract of a flexible cable 59 for connection of the anti-skid chain to the wheel of a vehicle. The connecting means between the first and the second half-shell 2, 3 further comprise shaped tabs 3a which project from the second half-shell 3 towards the first half-shell 2 and are L-shaped such as each to define an undercut, facing towards the second half-shell 3, in which undercut a portion of the lateral edge of the first half-shell 2 is engaged.

The first half-shell 2 is provided with a spiral channel 4 on a surface facing towards the second half-shell 3, which spiral channel 4 is concentric to the common axis x, and which spiral channel 4 faces towards the second half-shell 3. The spiral channel 4 is predisposed to slidably house engaging pins 52 solidly constrained to the connecting portions 51 of the radial arms 50.

The second half-shell 3 is provided, on a surface facing towards the first half-shell 2, with at least two straight channels 6 which extend radially with respect to the common axis x along a same direction. The number of straight channels 6 can vary on the basis of the number of radial arms 50 the anti-skid chain is provided with, preferably but not exclusively four in number, as illustrated in figure 1. In this case the straight channels 6 the second half-shell 3 is provided with are four in number. The straight channels 6 are predisposed to slidably house the connecting portions 51 of the radial arms 50. In this way a rotation of the first half-shell 2 with respect to the second half-shell 3, by means of a rotation of the spiral channel 4, leads to a radial translation of the engaging pins 52 which the radial arms 50 are solidly constrained to. The spiral channel 4 preferably has a constant step such that a rotation of the first half-shell 2 induces a same radial translation for all the connecting portions 51. In order to facilitate rotation of the first half-shell 2, the first half-shell 2 is provided with manoeuvring appendages 9 which project from the first half-shell 2 on the opposite side to the second half-shell 3.

This ability to radially change the position of the radial arms 50 enables the anti-skid device to be adapted to wheels of a different diameter (within a determined field of variation). In substance the radial adjustment of the arms 50 is effected with the aim of adapting the chain to various predetermined tyre dimensions. Once the adjustment for the desired tyre has been made, the first half-shell 2 can be blocked with respect to the second half-shell 3. From this moment on no further radial adjustments are required unless the device is to be used on a tyre of a different size.

In order to enable a selective blocking between the two half-shells 2, 3 the first half-shell 2 is provided with at least a first seating 5 which opens towards the second half-shell 3. The first half-shell 2 is preferably provided with a second seating 8, arranged in a diametrically-opposite position to the first seating 5 with respect to the common axis x.

The second half-shell 3 is provided with a pin 7 that projects towards the first half-shell 2 and is conformed and arranged such as to engage in the first seating 5 at a first determined relative angular position between the first half-shell 2 and the second half-shell 3. At the first determined relative angular position between the first half-shell 2 and the second half-shell 3, the pin 7 is aligned to the first seating 5. The engagement of the pin 7 in the first seating 5 prevents relative rotation between the first and the second half-shells 2, 3, blocking the two half-shells 2, 3 in the first determined angular position. If the second seating 8 is present, the pin 7 is conformed and arranged such as to engage in the second seating 8 at a second determined relative angular position between the first and the second half-shells 2, 3. The relative angular positions between the first and the second half-shells 2, 3 are separated from one another by the same angular step which separates the seatings 5, 8. The number of seatings might also be greater, on the basis of the number of relative angular positions that the first and the second half-shell 2, 3 have to take on.

The pin 7 is mobile between a first position, in which it projects more with respect to the second half-shell 3 and can engage in the first seating 5, and a second position, in which it projects less with respect to the second half-shell 3 and does not engage in the first seating 5.

In the preferred embodiment of the invention, the pin 7 is slidable in a parallel direction to the common axis x into a cylindrical seating 10 afforded through the second half-shell 3. Further, the pin 7 is cylindrical and is provided with a head portion 7a which in the first position of the pin 7 projects from the second half-shell 3 and can engage in the first seating 5, and a stem 7b having a smaller diameter with respect to the head portion 7a. Elastic means 11, for example a helix spring concentric to the stem 7b, are arranged internally of the cylindrical seating 10 in contact with a bottom surface of the cylindrical heat 10 and a base surface of the head portion 7a, such as to push the pin 7 towards the first position.

The first and the second seatings 5, 8 are preferably arranged on the peripheral edge of the first half-shell 2 and are constituted by semi-cylindrical recesses which extend axially through the body of the first half-shell 2. This conformation of the seating 5, 8 is particular easy to reproduce.

When the pin 7 is in the first position and is engaged in the first or second seating 5, 8, the first and the second half-shell 2, 3 are solidly constrained to one another in rotation about the common axis x. If the pin 7 is engaged in the first seating 5, in order to enable relative rotation between the two half-shells 2, 3, the pin 7 has to be disengaged from the first seating 2, pushing the pivot itself into the second position. Thereafter the first and the second half-shells 2, 3 can be rotated with respect to one another such that the pin 7 de-aligns with respect to the first seating 5. If the pin 7 is de-aligned with respect to the first seating 5 the first and the second half-shells 2, 3 can be rotated with respect to one another by an angle that corresponds to the angular step between the first and the second seating. When the pin 7 is aligned to the second seating 8, the elastic means 11 push the pin towards the first position in which it engages in the second seating 8 and newly renders the first and the second half-shells 2, 3 solidly constrained in rotation about the common axis x.

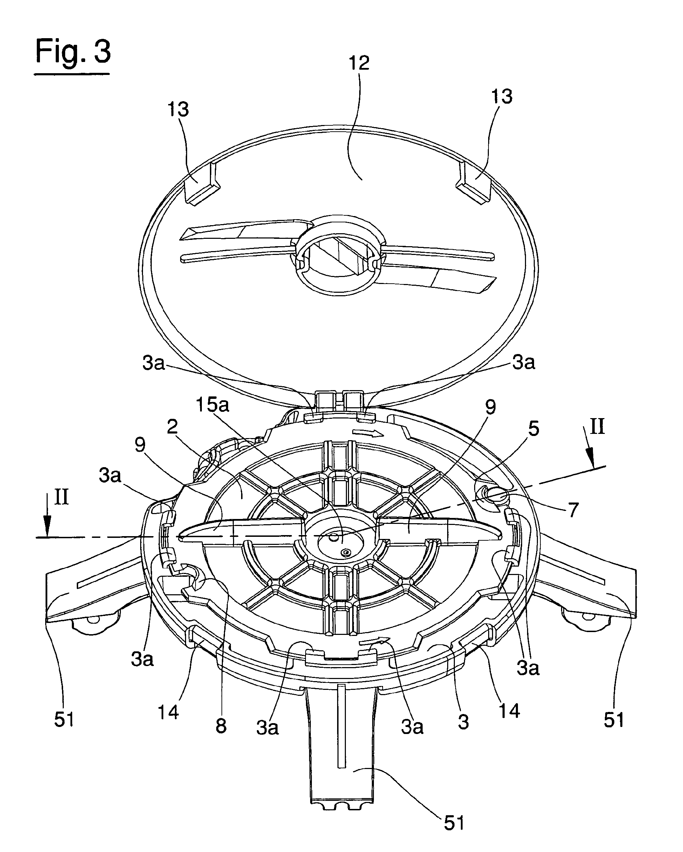

The support body of the present invention can further be provided with a cover 12, hinged to the second half-shell 3 and rotatable between a closed position, in which it is superposed on the first half-shell 2, closing it between itself and the second half-shell 3, and an open position, in which it is distanced from the first half-shell 2 and the first half-shell 2 is accessible from the outside. As can be seen in figure 3, the cover 12 is hinged in proximity of the peripheral edge of the second half-shell 3. The cover 12 preferably exhibits a convex shape with a concavity facing towards the first and the second half-shell 2, 3. In this way, when in the closed position, the cover 12 is arranged with the edge thereof in contact with the second half-shell 3, closing the first half-shell 2. In the closed position of the cover 12, the first half-shell 2 is protected from any contact or impact with external elements. In order to maintain the cover 12 stably in the closed position thereof, one or ore shaped appendages 13 are provided, which project inferiorly of the external edge of the cover 12. These shaped appendages 13 are shaped such as to engage in respective seatings 14 afforded in the external edge of the second half-shell 3. The shaped appendages 13 can, for example, be L-shaped such as to define an undercut which houses a portion of the external edge of the second half-shell 3.

## Claims

1. A support body for an anti-skid chain, **characterised in that:**
it comprises a first half-shell (2) and a second half-shell (3), having an overall circular and flat development, which are coaxial to a common axis (x) and are rotatably associated to one another about the common axis (x);
the first half-shell (2) is provided with a spiral groove (4), concentric to the common axis (x), which faces towards the second half-shell (3), and is also provided with at least a first seating (5) which opens towards the second half-shell (3);
the second half-shell (3) is provided with at least two straight grooves (6), which extend radially with respect to the common axis (x) along a same direction, and is also provided with a pin (7) which projects towards the first half-shell (2) and is conformed and arranged such as to engage in the first seating (5) in a determined relative angular position between the first half-shell (2) and the second half-shell (3), the pin (7) being mobile between a first position, in which the pin (7) projects more with respect to the second half-shell (3) and can engage in the first seating (5), and a second position, in which the pin (7) projects less with respect to the second half-shell (3) and does not engage in the first seating (5).

2. The support body of claim 1, wherein the first half-shell (2) is provided with a second seating (8), arranged in a diametrically-opposite position to the first seating (5) with respect to the common axis (x).

3. The support body of claim 2, wherein the first seating (5) and the second seating (8) are arranged on a peripheral edge of the first half-shell (2) and are constituted by semi-cylindrical recesses which extend axially through the body of the first half-shell (2).

4. The support body of at least one of the preceding claims, wherein the pin (7) is slidable in a parallel direction to the common axis (x) within a cylindrical seating (10) afforded in the second half-shell (3).

5. The support body of claim 4, wherein the pin (7) is cylindrical and provided with a head portion (7a) which in the first position of the pin (7) projects from the second half-shell (3) and can engage in the first seating (5), and is further provided with a stem (7b) having a smaller diameter than the head portion (7a).

6. The support body of claim 5, wherein elastic means (11) are arranged internally of the cylindrical seating (10) concentrically to the stem (7b) such as to push the pin (7) towards the first position thereof.

7. The support body of at least one of the preceding claims, wherein the first half-shell (2) and the second half-shell (3) are constrained to one another in relative movement directed along the common axis (x), by means of a shaped pin (15, 16), concentric to the common axis (x), which is arranged through the first half-shell (2) and the second half-shell (3) and is provided, at ends thereof, with a circular element (15a) and a shaped annular swelling (16a) which define two undercuts predisposed respectively to abut the first half-shell (2) and the second half-shell (3).

8. The support body of at least one of the preceding claims, wherein the first half-shell (2) and the second half-shell (3) are constrained to one another in a relative movement directed along the common axis (x), by means of shaped tabs (3a) which project from the second half-shell (3) and are conformed such as to engage to a portion of the lateral edge of the first half-shell (2).

9. The support body of at least one of the preceding claims, wherein the first half-shell (2) is provided with manoeuvring appendages (9) which project from the first half-shell (2) on an opposite side thereof with respect to a position of the second half-shell (3).

10. The support body of at least one of the preceding claims, comprising a cover (12) hinged to the second half-shell (3) and rotatable between a closed position, in which it is superposed on the first half-shell (2) to close the first half-shell (2) between the cover (12) itself and the second half-shell (3), and an open position, in which it is distanced from the first half-shell (2) and the first half-shell (2) is accessible from outside.
